# EUROPÄISCHE PATENTSCHRIFT

(11) **EP 0 976 221 B1**
(45) Veröffentlichungstag und Bekanntmachung des Hinweises auf die Patenterteilung: **14.04.2004**
(21) Anmeldenummer: 98916802.6
(22) Anmeldetag: 25.02.1998
(51) Int. Cl.: H04L 9/32

(54) **VERFAHREN UND ANORDNUNG ZUR BILDUNG UND ÜBERPRÜFUNG EINER PRÜFSUMME FÜR DIGITALE DATEN, DIE IN MEHRERE DATENSEGMENTE GRUPPIERT SIND**
METHOD AND SYSTEM FOR PRODUCING AND CHECKING A HASH TOTAL FOR DIGITAL DATA GROUPED IN SEVERAL DATA SEGMENTS
PROCEDE ET DISPOSITIF POUR LA CONSTITUTION ET LA VERIFICATION D'UN TOTAL DE CONTROLE POUR DONNEES NUMERIQUES GROUPEES DANS PLUSIEURS SEGMENTS DE DONNEES

(30) Priorität: 14.04.1997 DE 19715486
(43) Veröffentlichungstag der Anmeldung: 02.02.2000
(73) Patentinhaber: SIEMENS AKTIENGESELLSCHAFT, 80333 München (DE)
(72) Erfinder: HANCK, Martina, D-85635 Höhenkirchen (DE); HOFFMANN, Gerhard, D-81547 München (DE); LUKAS, Klaus, D-81793 München (DE)
(86) Internationale Anmeldenummer: PCT/DE1998/000563
(87) Internationale Veröffentlichungsnummer: WO 1998/047264

(56) Entgegenhaltungen:
- EP-A- 0 609 595
- EP-A- 0 654 920
- JP-A- 6 315 027

## Beschreibung

Bei der digitalen Kommunikation, d.h. beim Austausch digitaler Daten ist es oftmals wünschenswert, die Übertragung der elektronischen Daten hinsichtlich verschiedenster Aspekte abzusichern.

Ein sehr bedeutender Aspekt ist der Schutz der zu übertragenden digitalen Daten gegen unerlaubte Modifikation, die sog. Sicherung der Integrität der Daten.

Aus [1] ist zum Schutz gegen unerlaubte Modifikation digitaler Daten die sog. kryptographische Prüfsumme bekannt, z.B. die digitale Signatur. Das in [1] beschriebene Verfahren basiert auf der Bildung eines Hashwertes aus den digitalen Nutzdaten und der anschließenden kryptographischen Bearbeitung des Hashwertes mit einem kryptographischen Schlüssel. Das Ergebnis ist eine kryptographische Prüfsumme. Zur Überprüfung der Integrität wird mit einem entsprechenden kryptographischen Schlüssel die inverse kryptographische Operation auf die gebildete Prüfsumme durchgeführt und das Ergebnis mit dem erneut aus den Nutzdaten berechneten Hashwert verglichen. Bei Übereinstimmung der ermittelten Hashwerte ist die Integrität der Nutzdaten gewährleistet.

Diese bisher übliche Vorgehensweise bedingt, daß die kompletten Nutzdaten auf Empfängerseite in identischer Reihenfolge, wie sie bei der Bildung des Hashwertes vorlagen, vorliegen müssen, da sonst die Hashwertbildung zu einem fehlerhaften Wert führt. Oftmals ist es jedoch bei der digitalen Kommunikation üblich, die zu übertragenden Nutzdaten aufgrund von Protokollrandbedingungen in kleinere Datensegmente, die auch als Datenpakete bezeichnet werden, zu unterteilen und zu übertragen. Die Datensegmente sind oftmals nicht an eine definierte Reihenfolge gebunden oder ein definiertes sequentielles Eintreffen der Datensegmente kann nicht garantiert werden. Bei dem Verfahren aus [1] ist es also erforderlich, daß die kompletten Nutzdaten auf Empfängerseite, d.h. nach der Übertragung der Datensegmente wieder in der Reihenfolge, in der sie ursprünglich gesendet wurden, zusammengesetzt werden. Die zu übertragenden Daten können ausschließlich in dieser Reihenfolge verifiziert werden. Dies bedeutet jedoch oft einen erheblichen zusätzlichen Aufwand zur Flußkontrolle der Datensegmente, soweit dies überhaupt im Rahmen des verwendeten Protokolls möglich ist.

Aus [2] sind Grundlagen über kommutative Verknüpfungen bekannt. In [2] ist ferner eine allgemeine Definition für kommutative Verknüpfungen angegeben. Anschaulich ist unter einer kommutativen Verknüpfung eine Verknüpfung zu verstehen, bei der die Reihenfolge der Einzelverknüpfungen unwichtig ist und jede Reihenfolge der Einzelverknüpfung immer zu der gleichen Gesamtverknüpfung führt. Eine kommutative Verknüpfung kann beispielsweise eine EXOR-Verknüpfung, eine additive Verknüpfung oder auch eine multiplikative Verknüpfung sein.

Aus [4] ist ein Verfahren zur Bildung einer kommutativen Prüfsumme, bei dem für jedes Datensegment unter Verwendung einer kryptographischen Operation (Verschlüsselung) gemäß dem Data Encryption Standard (DES) ein verschlüsseltes Datensegment gebildet wird, bekannt. Jedes der Datensegmente wird separat verschlüsselt, womit bei n Datensegmenten n kryptographisch bearbeitete Datensegmente gebildet werden. Die n kryptographischen Datensegmente werden einer EXKLUSIV-ODER-Verknüpfung unterzogen. Das Ergebnis der EXKLUSIV-ODER-Verknüpfung wird noch verkürzt und das verkürzte Ergebnis wird als kommutative Prüfsumme übertragen.

Aus [3] sind ein Verfahren und eine Vorrichtung zur Erzeugung von Prüfkodesegmenten auf das Auftreten von Quelldaten hin und zur Ermittlung von Fehlern in den Quelldaten bekannt.

Somit liegt der Erfindung das Problem zugrunde, Verfahren und Anordnungen zur Bildung und Überprüfung einer kryptographischen kommutativen Prüfsumme für digitale Daten, die in mehrere Datensegmente gruppiert sind, anzugeben, bei der eine Flußkontrolle für die einzelnen Datensegmente nicht mehr erforderlich ist.

Das Problem wird durch das Verfahren gemäß Patentanspruch 1, durch das Verfahren gemäß Patentanspruch 2, durch das Verfahren gemäß Patentanspruch 3, durch die Anordnung gemäß Patentanspruch 10, durch die Anordnung gemäß Patentanspruch 11 sowie durch die Anordnung gemäß Patentanspruch 12, gelöst.

Bei dem Verfahren gemäß Patentanspruch 1 wird für digitale Daten, die in mehrere Datensegmente gruppiert sind, für jedes Datensegment eine erste Segmentprüfsumme gebildet. Die gebildeten ersten Segmentprüfsummen werden durch eine kommutative Verknüpfung zu einer ersten kommutativen Prüfsumme verknüpft. Diese wird unter Verwendung einer kryptographischen Operation gesichert, wobei die kryptographische kommutative Prüfsumme gebildet wird.

Bei dem Verfahren gemäß Patentanspruch 2 wird eine vorgegebene kryptographische kommutative Prüfsumme, die digitalen Daten zugeordnet ist, die in mehrere Datensegmente gruppiert sind, überprüft. Dies erfolgt dadurch, daß für jedes Datensegment eine zweite Segmentprüfsumme gebildet wird und durch eine kommutative Verknüpfung der zweiten Segmentprüfsummen eine zweite kommutative Prüfsumme gebildet wird. Die zweite kommutative Prüfsumme und eine erste kommutative Prüfsumme werden auf Übereinstimmung überprüft. Die erste kommutative Prüfsumme wird durch eine inverse kryptographische Operation aus der kryptographischen kommutativen Prüfsumme erzeugt.

Bei dem Verfahren gemäß Patentanspruch 3 zur Bildung und Überprüfung einer kryptographischen kommutativen Prüfsumme für digitale Daten, die in Datensegmente gruppiert sind, wird für jedes Datensegment eine erste Segmentprüfsumme gebildet und die ersten Segmentprüfsummen werden durch eine kommutative Verknüpfung zu einer ersten kommutativen Prüfsumme verknüpft. Für jedes Datensegment der digitalen Daten, denen die erste kommutative Prüfsumme zugeordnet ist, werden zweite Segmentprüfsummen gebildet und durch kommutative Verknüpfung der zweiten Segmentprüfsummen wird eine zweite kommutative Prüfsumme gebildet. Die zweite kommutative Prüfsumme und die erste kommutative Prüfsumme werden auf Übereinstimmung überprüft.

Die Anordnung gemäß Patentanspruch 10 weist eine Recheneinheit auf, die derart eingerichtet ist, daß für jedes Datensegment eine Segmentprüfsumme gebildet wird, und daß durch eine kommutative Verknüpfung der Segmentprüfsummen die erste kommutative Prüfsumme gebildet wird. Diese wird unter Verwendung einer kryptographischen Operation gesichert, wobei die kryptographische kommutative Prüfsumme gebildet wird.

Die Anordnung gemäß Patentanspruch 11 weist eine Recheneinheit auf, die derart eingerichtet ist, daß für jedes Datensegment eine zweite Segmentprüfsumme gebildet wird, durch eine kommutative Verknüpfung der zweiten Segmentprüfsummen eine zweite kommutative Prüfsumme gebildet wird, und die zweite kommutative Prüfsumme (KP2) mit der ersten kommutativen Prüfsumme (KP1) auf Übereinstimmung überprüft wird. Die erste kommutative Prüfsumme wird durch eine inverse kryptographische Operation aus der kryptographischen kommutativen Prüfsumme erzeugt.

Die Anordnung gemäß Patentanspruch 12 weist eine Recheneinheit auf, die derart eingerichtet ist, daß folgende Verfahrensschritte durchgeführt werden:
a) für jedes Datensegment wird eine Segmentprüfsumme gebildet,
b) durch eine kommutative Verknüpfung der Segmentprüfsummen wird die erste kommutative Prüfsumme gebildet,
c) für jedes Datensegment der digitalen Daten, denen die erste kommutative Prüfsumme zugeordnet ist, wird eine zweite Segmentprüfsumme gebildet,
d) durch eine kommutative Verknüpfung der zweiten Segmentprüfsummen wird eine zweite kommutative Prüfsumme gebildet, und
e) die zweite kommutative Prüfsumme wird mit der ersten kommutativen Prüfsumme auf Übereinstimmung überprüft.

Ein erheblicher Vorteil der Verfahren sowie der Anordnungen ist darin zu sehen, daß durch Verwendung einer kommutativen Verknüpfung für einzelne Prüfsummen der Datensegmente eine Flußkontrolle für die Reihenfolge der einzelnen Datensegmente nicht mehr erforderlich ist.

Es ist ferner nicht mehr erforderlich, die kompletten Nutzdaten wieder in der ursprünglichen Reihenfolge, in der die erste kommutative Prüfsumme gebildet wurde, zusammenzusetzen.

Werden die digitalen Daten zwischen zwei Anordnungen übertragen, so ist ein weiterer Vorteil der Verfahren darin zu sehen, daß die Überprüfung der Integrität schon begonnen werden kann, bevor alle Datensegmente empfangen worden sind, da es nicht mehr erforderlich ist, die ursprüngliche Reihenfolge bei der Bildung der ersten Prüfsumme beizubehalten. Dies führt zu einer Zeitersparnis bei der Überprüfung der Integrität der Daten.

Anschaulich kann die Erfindung darin gesehen werden, daß bei mehreren Datensegmenten, die insgesamt die zu schützenden Daten darstellen, für jedes Datensegment eine Prüfsumme gebildet wird und die einzelnen Prüfsummen der Datensegmente kommutativ miteinander verknüpft werden.

Vorteilhafte Weiterbildungen der Erfindung ergeben sich aus den abhängigen Ansprüchen.

Es ist vorteilhaft, die erste kommutative Prüfsumme unter Verwendung mindestens einer kryptographischen Operation kryptographisch abzusichern.

Durch diese Weiterbildung wird erreicht, daß die kryptographische Sicherheit der Daten erheblich erhöht wird. Eine kryptographische Operation in diesem Sinne ist beispielsweise die Verschlüsselung der ersten kommutativen Prüfsumme mit einem symmetrischen oder auch mit einem asymmetrischen Verschlüsselungsverfahren, wodurch eine kryptographische Prüfsumme gebildet wird. Auf Empfängerseite wird das inverse kryptographische Verfahren zu dem kryptographischen Verfahren durchgeführt, um die kryptographische Sicherheit zu gewährleisten.

Zur Bildung einer Prüfsumme, wie sie im Rahmen des Dokuments zu verstehen ist, sind verschiedene Möglichkeiten bekannt:
- eine Prüfsumme kann durch Bildung von Hashwerten für die einzelnen Datensegmente gebildet werden;
- die Prüfsummen können auch durch sog. zyklische Codes (Cyclic Redundancy Check, CRC) gebildet werden;
- es kann ferner eine kryptographische Einwegfunktion zur Bildung der Prüfsummen für die Datensegmente verwendet werden.

Die Verfahren können vorteilhaft in verschiedenen Anwendungsszenarien eingesetzt werden.

Die Verfahren können sowohl bei der Übertragung digitaler Daten zum Schutz vor Manipulation der Daten eingesetzt werden als auch bei der Archivierung digitaler Daten in einem Rechner, in dem die erste kommutative Prüfsumme gebildet wird, und zusammen mit den zu archivierenden Daten abgespeichert wird. Die erste kommutative Prüfsumme kann bei dem Laden der digitalen Daten aus dem Archivspeicher überprüft werden, um eine Manipulation der archivierten Daten zu erkennen.

Das Verfahren kann vorteilhaft für die Sicherung digitaler Daten verwendet werden, deren Datensegmente nicht an eine Reihenfolge gebunden sind. Beispiele für solche Datensegmente sind paketorientierte Kommunikationsprotokolle, z.B. Netzmanagementprotokolle wie das Simple Network Management Protocol (SNMP) oder das Common Management Information Protocol (CMIP).

Im weiteren wird ein Ausführungsbeispiel der Erfindung anhand einer Figur näher erläutert. Auch wenn das Ausführungsbeispiel im weiteren anhand des Simple-Network-Management-Protocols (SNMP) erläutert wird, so stellt dies keine Einschränkung der Verwendbarkeit des Verfahrens dar. Das Verfahren kann immer dann eingesetzt werden wenn es gilt, eine Integritätssicherung für digitale Daten zu gewährleisten, die in mehrere Datensegmente gruppiert sind.

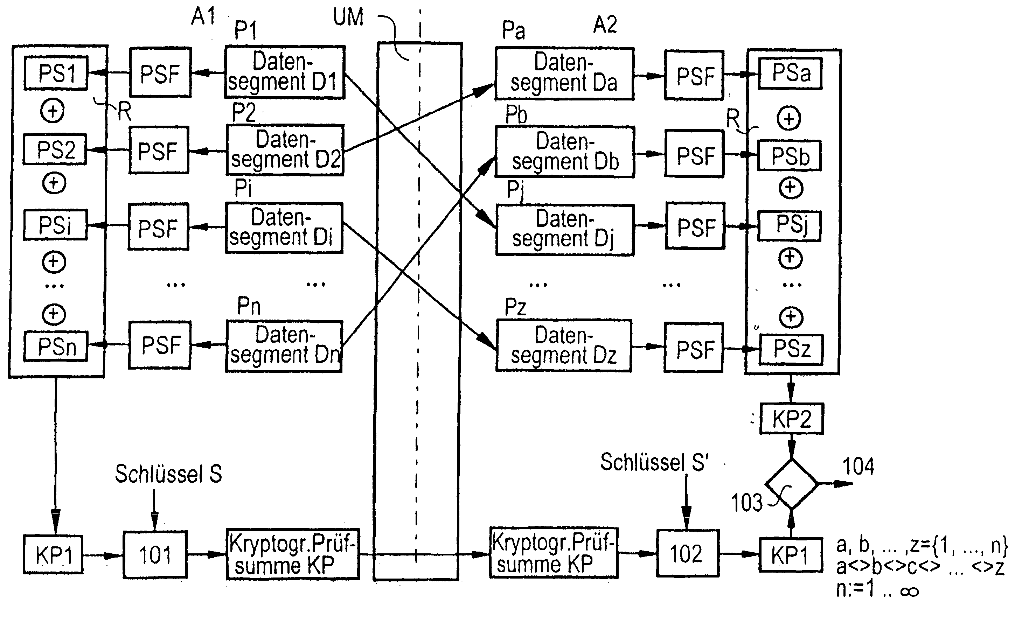

Die Figur zeigt zwei Anordnungen, wobei von der ersten Anordnung Datensegmente zu der zweiten Anordnung übertragen werden.

In der Figur ist eine erste Rechneranordnung A1 symbolisch dargestellt, in der Datensegmente (Di, i = 1 .. n) gespeichert sind. Die Datensegmente Di bilden zusammen die digitalen Daten, die auch als Nutzdaten bezeichnet werden, für die es gilt, die Integrität zu gewährleisten.

Sowohl die erste Rechneranordnung A1 als auch eine im weiteren beschriebene zweite Rechneranordnung A2 enthalten jeweils eine Recheneinheit R, die derart eingerichtet ist, daß die im weiteren beschriebenen Verfahrensschritte durchgeführt werden.

In der ersten Anordnung A1 sind die Datensegmente Di an Positionen Pi innerhalb des gesamten Datenstroms angeordnet. Für jedes Datensegment Di wird eine erste Segmentprüfsumme PSi unter Verwendung einer Prüfsummenfunktion PSF. Die einzelnen ersten Segmentprüfsumme PSi werden durch eine kommutative Verknupfung, wie sie in [2] definiert und beschrieben ist, zu einer ersten kommutativen Prüfsumme KP1 verknüpft. Die kommutative Verknüpfung zwischen den einzelnen Prüfsummen PSi sind in der Figur durch ein EXOR-Zeichen ⊕ symbolisch dargestellt.

Die erste kommutative Prüfsumme KP1 wird einem kryptographischen Verfahren, einem symmetrischen oder asymmetrischen Verfahren, unter Verwendung eines ersten kryptographischen Schlüssels S unterzogen (Schritt 101). Das Ergebnis der kryptographischen Operation ist eine kryptographische Prüfsumme KP.

Sowohl die Datensegmente Di als auch die kryptographische Prüfsumme KP werden über ein Übertragungsmedium, vorzugsweise eine Leitung oder auch eine logischen Verbindung, die in der Fig. durch eine Kommunikationsverbindung UM symbolisch dargestellt ist, zu einer zweiten Anordnung A2 übertragen und dort empfangen.

Die sich überkreuzenden Pfeile der Datensegmente Di in der Figur deuten an, daß durch die Übertragung der Datensegmente Di diese in einer gegenüber der Reihenfolge in der ersten Anordnung A1 verschobenen Positionen Pj (j = a .. z) empfangen werden.

So wird ein Datensegment D2 an der ersten Position Pa in der zweiten Anordnung A2 als Datensegment Da empfangen. Das Datensegment D1 wird als Datensegment Dj in der zweiten Anordnung empfangen. Das Datensegment Dn wird als empfangenes Datensegment Db in der zweiten Anordnung A2 an der zweiten Position Pb empfangen.

Entsprechend dem verwendeten Verfahren wird entweder mit dem ersten kryptographischen Schlüssel S bei Verwendung eines symmetrischen Verschlüsselungsverfahrens die inverse kryptographische Operation auf die kryptographische Prüfsumme KP ausgeführt oder bei Verwendung eines asymmetrischen kryptographischen Verfahrens unter Verwendung eines zweiten kryptographischen Schlüssels S'.

Das Ergebnis der inversen kryptographischen Operation (Schritt 102) ist bei korrekter Verschlüsselung und Entschlüsselung wiederum die erste kommutative Prüfsumme KP1.

Diese wird in der zweiten Anordnung A2 gespeichert. Für den Vergleich der nunmehr in permutierter Reihenfolge, verglichen mit der ursprünglichen Reihenfolge bei der Bildung der ersten kommutativen Prüfsumme KP1 empfangenen Datensegmente Dj, werden wiederum unter Verwendung der gleichen Prüfsummenverfahren PSF zweite Segmentprüfsummen PSj für die empfangenen Datensegmente Dj gebildet.

Die sich ergebenden zweiten Prüfsummen PSj werden wiederum kommutativ miteinander verknüpft zu einer zweiten kommutativen Prüfsummen KP2.

In einem weiteren Schritt 103 wird überprüft, ob die erste kommutative Prüfsumme KP1 mit der zweiten kommutativen Prüfsumme KP2 übereinstimmt.

Ist dies der Fall, so ist die Integrität der Datensegmente Di und somit die Integrität der gesamten digitalen Daten gewährleistet (Schritt 104), wenn die verwendeten kryptographischen Verfahren bzw. die verwendeten Verfahren zur Prüfsummenbildung die entsprechende kryptographische Sicherheit gewährleisten.

Stimmen die erste kryptographische Prüfsumme KP1 und die zweite kryptographische Prüfsumme KP2 nicht miteinander überein, so wurde die Integrität der Datensegmente Di verletzt und es wird eine Manipulation der Daten festgestellt und vorzugsweise einem Benutzer des Systems gemeldet.

Die Protokolldateneinheiten PDU (Protocol Data Units) sind in SNMP derart aufgebaut, daß in der Nutzdateninformation (sog. Variable Bindings) eine Liste von Objekten (Objektidentikatoren, OID/Value-Pairs) enthalten sein kann. Die Reihenfolge der Objekte innerhalb einer PDU ist dabei nicht festgelegt, so daß eine Permutation der Objekte bei der Übertragung der PDUs zwischen der ersten Anordnung A1 und der zweiten Anordnung A2 auftreten kann. Durch die Erfindung wird es nunmehr möglich, über alle Objekte einer SNMP-PDU eine einzige kryptographische Prüfsumme zu bilden, ohne daß die Reihenfolge der Objekte bzw. der PDUs berücksichtigt werden muß.

Im weiteren werden Alternativen zu dem oben beschriebenen Ausführungsbeispiel erläutert.

Das Verfahren zur Bildung der Prüfsumme PSF kann beispielsweise ein Verfahren zur Bildung von Hashwerten sein. Es kann aber auch Verfahren zur Bildung zyklischer Codes (Cyclic-Redundancy-Check, CRC) unter Verwendung rückgekoppelter Schieberegister eingesetzt werden. Auch können kryptographische Einwegfunktionen zur Bildung der Prüfsummen PSi bzw. PSj verwendet werden.

Ferner kann die kommutative Verknüpfung zusätzlich die Eigenschaft der Assoziativität aufweisen.

Sowohl das Verfahren zur Bildung der Prüfsumme als auch das Verfahren zur Überprüfung einer Prüfsumme können unabhängig voneinander durchgeführt werden. Es kann jedoch auch gemeinsam das Verfahren zur Bildung der Prüfsumme und das Verfahren zur Überprüfung der Prüfsumme durchgeführt werden.

Es ist ferner vorgesehen, keine Übertragung digitaler Daten vorzunehmen, sondern die digitalen Daten zu archivieren, d.h. in der ersten Anordnung A1 zu speichern, gemeinsam mit der ersten kommutativen Prüfsumme KP1. Bei der Wiederverwendung der archivierten Daten, d.h. beim Laden der Datensegmente Di aus dem Speicher der ersten Anordnung A1 wird dann das Verfahren zur Überprüfung der ersten kommutativen Prüfsumme KP1, wie es oben beschrieben wurde, durchgeführt. Somit können die erste Anordnung A1 und die zweite Anordnung A2 identisch sein.

Anschaulich kann die Erfindung darin gesehen werden, daß bei mehreren Datensegmenten, die insgesamt die zu schützenden Daten darstellen, für jedes Datensegment eine Prüfsumme gebildet wird und die einzelnen Prüfsummen der Datensegmente kommutativ miteinander verknüpft werden. Dadurch wird es möglich, eine Prüfsumme zu bilden und zu überprüfen, ohne daß die Reihenfolge der Datensegmente berücksichtigt werden muß.

Im Rahmen dieses Dokuments wurden folgende Veröffentlichungen zitiert:
[1] W. Stallings, Sicherheit in Netzwerk und Internet, Prentice Hall, ISBN 3-930436-29-9, S. 203-223, 1995
[2] K.-H. Kiyek und F. Schwarz, Mathematik für Informatiker, Teubner Verlag, ISBN 3-519-03277-X, S. 11-13, 1989
[3] DE-OS 2 048 365
[4] JP-A-6 315 027

## Patentansprüche

1. Verfahren zur Bildung einer kryptographischen kommutativen Prüfsumme (KP) für digitale Daten, die in mehrere Datensegmente (Di, i = 1 .. n) gruppiert sind, durch einen Rechner,
a) bei dem für jedes Datensegment (Di) eine Segmentprüfsumme (PSi) gebildet wird,
b) bei dem durch eine kommutative Verknüpfung (⊕) der Segmentprüfsummen (Psi) eine erste kommutative Prüfsumme (KP1) gebildet wird und
c) bei dem die erste kommutative Prüfsumme (KP1) unter Verwendung mindestens einer kryptographischen Operation kryptographisch gesichert wird, wobei die kryptographische kommutative Prüfsumme (KP) gebildet wird.

2. Verfahren zur Überprüfung einer vorgegebenen kryptographischen kommutativen Prüfsumme (KP), die digitalen Daten zugeordnet ist, die in mehrere Datensegmente gruppiert sind, durch einen Rechner,
a) bei dem die kryptographische kommutative Prüfsumme (KP)einer inversen kryptographischen Operation unterzogen wird zur Bildung einer ersten kommutativen Prüfsumme (KP1),
b) bei dem für jedes Datensegment (Dj, j = a .. z) eine zweite Segmentprüfsumme (PSj) gebildet wird,
c) bei dem durch eine kommutative Verknüpfung (⊕) der zweiten Segmentprüfsummen (PSj) eine zweite kommutative Prüfsumme (KP2) gebildet wird, und
d) bei dem die zweite kommutative Prüfsumme (KP2) mit der ersten kommutativen Prüfsumme (KP1) auf Übereinstimmung überprüft wird.

3. Verfahren nach Anspruch 1 und Anspruch 2 zur Bildung und Überprüfung einer kryptographischen kommutativen Prüfsumme (KP) für digitale Daten, die in mehrere Datensegmente (Di, i = 1 .. n) gruppiert sind, durch einen Rechner,
a) bei dem für jedes Datensegment (Di) eine Segmentprüfsumme (PSi) gebildet wird,
b) bei dem durch eine kommutative Verknüpfung (⊕) der Segmentprüfsummen (PSi) eine erste kommutative Prüfsumme (KP1) gebildet wird,
c) bei dem die erste kommutative Prüfsumme (KP1) unter Verwendung mindestens einer kryptographischen Operation kryptographisch gesichert wird, wobei die kryptographische kommutative Prüfsumme (KP) gebildet wird,
d) bei dem die kryptographische kommutative Prüfsumme (KP)einer inversen kryptographischen Operation unterzogen wird zur Bildung einer ersten rekonstruierten kommutativen Prüfsumme (KP1),
e) bei dem für jedes Datensegment (Dj, j = a .. z) der digitalen Daten, denen die erste kommutative Prüfsumme (KP1) zugeordnet ist, eine zweite Segmentprüfsumme (PSj) gebildet wird,
f) bei dem durch eine kommutative Verknüpfung (⊕) der zweiten Segmentprüfsummen (PSj) eine zweite kommutative Prüfsumme (KP2) gebildet wird, und
g) bei dem die zweite kommutative Prüfsumme (KP2) mit der ersten rekonstruierten kommutativen Prüfsumme (KP1) auf Übereinstimmung überprüft wird.

4. Verfahren nach einem der Ansprüche 1 bis 3, bei dem die Segmentprüfsummen (PSi, PSj) nach mindestens einer der folgenden Arten gebildet werden:
- Hashwertbildung,
- Bildung von CRC-Codes,
- Verwendung mindestens einer kryptographischen Einwegfunktion.

5. Verfahren nach einem der Ansprüche 1 bis 4,
bei dem die kryptographische Operation ein symmetrisches kryptographisches Verfahren ist.

6. Verfahren nach Ansprüche 1 bis 4,
bei dem die kryptographische Operation ein asymmetrisches kryptographisches Verfahren ist.

7. Verfahren nach einem der Ansprüche 1 bis 6,
bei dem die kommutative Verknüpfung (⊕) die Eigenschaft der Assoziativität aufweist.

8. Verfahren nach einem der Ansprüche 1 bis 7,
bei dem digitale Daten geschützt werden, deren Datensegmente (Di) nicht an eine Reihenfolge gebunden sind.

9. Verfahren nach einem der Ansprüche 1 bis 7, bei dem digitale Daten geschützt werden, die nach einem Netzmanagement-Protokoll verarbeitet werden.

10. Anordnung zur Bildung einer kryptographischen kommutativen Prüfsumme (KP) für digitale Daten, die in mehrere Datensegmente (Di, i = 1 .. n) gruppiert sind,
mit einer Recheneinheit, die derart eingerichtet ist, daß
a) für jedes Datensegment (Di) eine Segmentprüfsumme (PSi) gebildet wird,
b) durch eine kommutative Verknüpfung (⊕) der Segmentprüfsummen (PSi) eine erste kommutative Prüfsumme (KP1) gebildet wird und
c) die erste kommutative Prüfsumme (KP1) unter Verwendung mindestens einer kryptographischen Operation kryptographisch gesichert wird,
wobei die kryptographische kommutative Prüfsumme (KP) gebildet wird.

11. Anordnung zur Überprüfung einer vorgegebenen kryptographischen kommutativen Prüfsumme (KP), die digitalen Daten zugeordnet ist, die in mehrere Datensegmente gruppiert sind,
mit einer Recheneinheit, die derart eingerichtet ist, daß
a) die kryptographische kommutative Prüfsumme (KP) einer inversen kryptographischen Operation unterzogen wird zur Bildung einer ersten kommutativen Prüfsumme (KP1),
b) für jedes Datensegment (Dj, j = a .. z) eine zweite Segmentprüfsumme (PSj) gebildet wird,
c) durch eine kommutative Verknüpfung (⊕) der zweiten Segmentprüfsummen (PSj) eine zweite kommutative Prüfsumme (KP2) gebildet wird, und
d) die zweite kommutative Prüfsumme (KP2) mit der ersten kommutativen Prüfsumme (KP1) auf Übereinstimmung überprüft wird.

12. Anordnung nach Anspruch 10 und Anspruch 11 zur Bildung und Überprüfung einer kryptographischen kommutativen Prüfsumme (KP) für digitale Daten, die in mehrere Datensegmente (Di, i = 1 .. n) gruppiert sind,
mit mindestens einer Recheneinheit, die derart eingerichtet ist, daß
a) für jedes Datensegment (Di) eine Segmentprüfsumme (PSi) gebildet wird,
b) durch eine kommutative Verknüpfung (⊕) der Segmentprüfsummen (PSi) eine erste kommutative Prüfsumme (KP1) gebildet wird,
c) die erste kommutative Prüfsumme (KP1) unter Verwendung mindestens einer kryptographischen Operation kryptographisch gesichert wird, wobei die kryptographische kommutative Prüfsumme (KP) gebildet wird,
d) die kryptographische kommutative Prüfsumme (KP) einer inversen kryptographischen Operation unterzogen wird zur Bildung einer ersten rekonstruierten kommutativen Prüfsumme (KP1),
e) für jedes Datensegment (Dj, j = a .. z) der digitalen Daten, denen die erste kommutative Prüfsumme (KP1) zugeordnet ist, eine zweite Segmentprüfsumme (PSj) gebildet wird,
f) durch eine kommutative Verknüpfung (⊕) der zweiten Segmentprüfsummen (PSj) eine zweite kommutative Prüfsumme (KP2) gebildet wird, und
g) die zweite kommutative Prüfsumme (KP2) mit der ersten rekonstruierten kommutativen Prüfsumme (KP1) auf Übereinstimmung überprüft wird.

13. Anordnung nach einem der Ansprüche 10 bis 12, bei der die Recheneinheit derart eingerichtet ist, daß die Segmentprüfsummen (PSi, PSj) nach mindestens einer der folgenden Arten gebildet werden:
- Hashwertbildung,
- Bildung von CRC-Codes,
- Verwendung mindestens einer kryptographischen Einwegfunktion.

14. Anordnung nach einem der Ansprüche 10 bis 13,
bei der die Recheneinheit derart eingerichtet ist, daß die kryptographische Operation ein symmetrisches kryptographisches Verfahren ist.

15. Anordnung nach einem der Ansprüche 10 bis 13,
bei der die Recheneinheit derart eingerichtet ist, daß die kryptographische Operation ein asymmetrisches kryptographisches Verfahren ist.

16. Anordnung nach einem der Ansprüche 10 bis 15,
bei der die Recheneinheit derart eingerichtet ist, daß die kommutative Verknüpfung (⊕) die Eigenschaft der Assoziativität aufweist.

17. Anordnung nach einem der Ansprüche 10 bis 16,
bei der die Recheneinheit derart eingerichtet ist, daß digitale Daten geschützt werden, deren Datensegmente (Di) nicht an eine Reihenfolge gebunden sind.

18. Anordnung nach einem der Ansprüche 10 bis 16,
bei der die Recheneinheit derart eingerichtet ist, daß digitale Daten geschützt werden, die nach einem Netzmanagement-Protokoll verarbeitet werden.

## Claims

1. Method for forming a cryptographic commutative checksum (KP) for digital data which are grouped into a number of data segments (Di, i = 1 .. n), by a computer,
a) in which a segment checksum (PSi) is formed for each data segment (Di),
b) in which a first commutative checksum (KP1) is formed by a commutative operation (⊕) on the segment checksums (PSi), and
c) in which the first commutative checksum (KP1) is cryptographically protected using at least one cryptographic operation, with the cryptographic commutative checksum (KP) being formed.

2. Method for checking a predetermined cryptographic commutative checksum (KP) which is allocated to digital data which are grouped into a number of data segments, by a computer,
a) in which the cryptographic commutative checksum (KP) is subjected to an inverse cryptographic operation in order to form a first commutative checksum (KP1),
b) in which a second segment checksum (PSj) is formed for each data segment (Dj, j = a .. z),
c) in which a second commutative checksum (KP2) is formed by a commutative operation (⊕) on the second segment checksums (PSj), and
d) in which the second commutative checksum (KP2) is checked for a match with the first commutative checksum (KP1).

3. Method according to Claim 1 and Claim 2 for forming and checking a cryptographic commutative checksum (KP) for digital data which are grouped into a number of data segments (Di, i = 1 .. n), by a computer,
a) in which a segment checksum (PSi) is formed for each data segment (Di),
b) in which a first commutative checksum (KP1) is formed by a commutative operation (⊕) on the segment checksums (PSi),
c) in which the first commutative checksum (KP1) is cryptographically protected using at least one cryptographic operation, with the cryptographic commutative checksum (KP) being formed,
d) in which the cryptographic commutative checksum (KP) is subjected to an inverse cryptographic operation in order to form a first reconstructed commutative checksum (KP1),
e) in which a second segment checksum (PSj) is formed for each data segment (Dj, j = a .. z) of the digital data to which the first commutative checksum (KP1) is allocated,
f) in which a second commutative checksum (KP2) is formed by a commutative operation (⊕) on the second segment checksums (PSj), and
g) in which the second commutative checksum (KP2) is checked for a match with the first reconstructed commutative checksum (KP1).

4. Method according to one of Claims 1 to 3, in which the segment checksums (PSi, PSj) are formed in accordance with at least one of the following types:
- forming a hashing value,
- forming CRC codes,
- using at least one cryptographic one-way function.

5. Method according to one of Claims 1 to 4, in which the cryptographic operation is a symmetric cryptographic method.

6. Method according to Claims 1 to 4, in which the cryptographic operation is an asymmetric cryptographic method.

7. Method according to one of Claims 1 to 6, in which the commutative operation (⊕) exhibits the property of associativity.

8. Method according to one of Claims 1 to 7, in which digital data are protected, the data segments (Di) of which are not tied to an order.

9. Method according to one of Claims 1 to 7, in which digital data are protected which are processed in accordance with a network management protocol.

10. Arrangement for forming a cryptographic commutative checksum (KP) for digital data which are grouped into a number of data segments (Di, i = 1 .. n), by means of an arithmetic and logic unit which is arranged in such a manner that
a) a segment checksum (PSi) is formed for each data segment (Di),
b) a first commutative checksum (KP1) is formed by a commutative operation (⊕) on the segment checksum (PSi), and
c) the first commutative checksum (KP1) is cryptographically protected by using at least one cryptographic operation,
with the cryptographic commutative checksum (KP) being formed.

11. Arrangement for checking a predetermined cryptographic commutative checksum (KP) which is allocated to digital data which are grouped into a number of data segments, by means of an arithmetic and logic unit which is arranged in such a manner that
a) the cryptographic commutative checksum (KP) is subjected to an inverse cryptographic operation in order to form a first commutative checksum (KP1),
b) a second segment checksum (PSj) is formed for each data segment (Dj, j = a .. z),
c) a second commutative checksum (KP2) formed by a commutative operation (⊕) on the second segment checksum (PSj), and
d) the second commutative checksum (KP2) is checked for a match with the first commutative checksum (KP1).

12. Arrangement according to Claim 10 and Claim 11 for forming and checking a cryptographic commutative checksum (KP) for digital data which is grouped into a number of data segments (Di, i = 1 .. n), by means of at least one arithmetic and logic unit which is arranged in such a manner that
a) a segment checksum (PSi) is formed for each data segment (Di),
b) a first commutative checksum (KP1) is formed by a commutative operation (⊕) on the segment checksums (PSi),
c) the first commutative checksum (KP1) is cryptographically protected using at least one cryptographic operation, with the cryptographic commutative checksum (KP) being formed,
d) the cryptographic commutative checksum (KP) is subjected to an inverse cryptographic operation in order to form a first reconstructed commutative checksum (KP1),
e) a second segment checksum (PSj) is formed for each data segment (Dj, j = a .. z) of the digital data to which the first commutative checksum (KP1) is allocated,
f) a second commutative checksum (KP2) is formed by a commutative operation (⊕) on the second segment checksums (PSj), and
g) the second commutative checksum (KP2) is checked for a match with the first reconstructed commutative checksum (KP1).

13. Arrangement according to one of Claims 10 to 12, in which the arithmetic and logic unit is arranged in such a manner that the segment checksums (PSi, PSj) are formed in accordance with at least one of the following types:
- forming a hashing value,
- forming CRC codes,
- using at least one cryptographic one-way function.

14. Arrangement according to one of Claims 10 to 13, in which the arithmetic and logic unit is arranged in such a manner that the cryptographic operation is a symmetric cryptographic method.

15. Arrangement according to one of Claims 10 to 13, in which the arithmetic and logic unit is arranged in such a manner that the cryptographic operation is an asymmetric cryptographic method.

16. Arrangement according to one of Claims 10 to 15, in which the arithmetic and logic unit is arranged in such a manner that the commutative operation (⊕) exhibits the property of associativity.

17. Arrangement according to one of Claims 10 to 16, in which the arithmetic and logic unit is set up in such a manner that the digital data are protected, the data segments (Di) of which are not tied to an order.

18. Arrangement according to one of Claims 10 to 16, in which the arithmetic and logic unit is arranged in such a manner that the digital data are protected which are processed in accordance with a network management protocol.

## Revendications

1. Procédé pour le calcul d'un total de contrôle commutatif cryptographique (KP) pour données numériques groupées dans plusieurs segments de données (Di, i = 1 .. n) par un ordinateur,
a) dans lequel on calcule pour chaque segment de données (Di) un total de contrôle de segment (PSi),
b) dans lequel on calcule par une opération commutative (⊕) des totaux de contrôle de segment (PSi) un premier total de contrôle commutatif (KP1), et
c) dans lequel on protège cryptographiquement le premier total de contrôle commutatif (KP1) à l'aide d'au moins une opération cryptographique, obtenant ainsi le total de contrôle commutatif cryptographique (KP).

2. Procédé pour la vérification d'un total de contrôle commutatif cryptographique (KP) prédéfini, qui est affecté à des données numériques groupées dans plusieurs segments de données, par un ordinateur,
a) dans lequel on soumet le total de contrôle commutatif cryptographique (KP) à une opération cryptographique inverse pour calculer un premier total de contrôle commutatif (KP1),
b) dans lequel on calcule pour chaque segment de données (Dj, j = a .. z) un deuxième total de contrôle de segment (PSj),
c) dans lequel on calcule par une opération commutative (⊕) des deuxièmes totaux de contrôle de segment (PSj) un deuxième total de contrôle commutatif (KP2), et
d) dans lequel on vérifie la correspondance du deuxième total de contrôle commutatif (KP2) avec le premier total de contrôle commutatif (KP1).

3. Procédé selon la revendication 1 et la revendication 2 pour le calcul et la vérification d'un total de contrôle commutatif cryptographique (KP) pour données numériques groupées dans plusieurs segments de données (Di, i = 1 . . n) par un ordinateur,
a) dans lequel on calcule pour chaque segment de données (Di) un total de contrôle de segment (PSi),
b) dans lequel on calcule par une opération commutative (⊕) des totaux de contrôle de segment (PSi) un premier total de contrôle commutatif (KP1),
c) dans lequel on protège cryptographiquement le premier total de contrôle commutatif (KP1) à l'aide d'au moins une opération cryptographique, obtenant ainsi le total de contrôle commutatif cryptographique (KP),
d) dans lequel on soumet le total de contrôle commutatif cryptographique (KP) à une opération cryptographique inverse pour calculer un premier total de contrôle commutatif (KP1) reconstruit,
e) dans lequel on calcule pour chaque segment de données (Dj, j = a .. z) des données numériques auxquelles est affecté le premier total de contrôle commutatif (KP1), un deuxième total de contrôle de segment (PSj),
f) dans lequel on calcule par une opération commutative (⊕) des deuxièmes totaux de contrôle de segment (PSj) un deuxième total de contrôle commutatif (KP2), et
g) dans lequel on vérifie la correspondance du deuxième total de contrôle commutatif (KP2) avec le premier total de contrôle commutatif (KP1) reconstruit.

4. Procédé selon l'une des revendications 1 à 3, dans lequel on calcule les totaux de contrôle de segment (PSi, PSj) selon l'un au moins des modes suivants:
- calcul de la valeur de hachage ("hash value")
- calcul de codes CRC
- utilisation d'au moins une fonction unidirectionnelle cryptographique.

5. Procédé selon l'une des revendications 1 à 4, dans lequel l'opération cryptographique est un procédé cryptographique symétrique.

6. Procédé selon l'une des revendications 1 à 4, dans lequel l'opération cryptographique est un procédé cryptographique asymétrique.

7. Procédé selon l'une des revendications 1 à 6, dans lequel l'opération commutative (⊕) possède la propriété de l'associativité.

8. Procédé selon l'une des revendications 1 à 7, dans lequel on protège les données numériques dont les segments de données (Di) ne sont pas liés à un ordre.

9. Procédé selon l'une des revendications 1 à 7, dans lequel on protège les données numériques qui sont traitées selon un protocole de gestion de réseau.

10. Dispositif pour le calcul d'un total de contrôle commutatif cryptographique (KP) pour données numériques groupées dans plusieurs segments de données (Di, i = 1 .. n),
comprenant une unité de calcul configurée de manière
a) à calculer pour chaque segment de données (Di) un total de contrôle de segment (PSi),
b) à calculer par une opération commutative (⊕) des totaux de contrôle de segment (PSi) un premier total de contrôle commutatif (KP1), et
c) à protéger cryptographiquement le premier total de contrôle commutatif (KP1) à l'aide d'au moins une opération cryptographique,
obtenant ainsi le total de contrôle commutatif cryptographique (KP).

11. Dispositif pour la vérification d'un total de contrôle commutatif cryptographique (KP) prédéfini, affecté à des données numériques groupées dans plusieurs segments de données,
comprenant une unité de calcul configurée de manière
a) à soumettre le total de contrôle commutatif cryptographique (KP) à une opération cryptographique inverse pour calculer un premier total de contrôle commutatif (KP1),
b) à calculer pour chaque segment de données (Dj, j = a .. z) un deuxième total de contrôle de segment (PSj),
c) à calculer par une opération commutative (⊕) des deuxièmes totaux de contrôle de segment (PSj) un deuxième total de contrôle commutatif (KP2), et
d) à vérifier la correspondance du deuxième total de contrôle commutatif (KP2) avec le premier total de contrôle commutatif (KP1).

12. Dispositif selon la revendication 10 et la revendication 11 pour le calcul et la vérification d'un total de contrôle commutatif cryptographique (KP) pour données numériques groupées dans plusieurs segments de données (Di, i = 1 . . n),
comprenant au moins une unité de calcul configurée de manière
a) à calculer pour chaque segment de données (Di) un total de contrôle de segment (PSi),
b) à calculer par une opération commutative (⊕) des totaux de contrôle de segment (PSi) un premier total de contrôle commutatif (KP1),
c) à protéger cryptographiquement le premier total de contrôle commutatif (KP1) à l'aide d'au moins une opération cryptographique, obtenant ainsi le total de contrôle commutatif cryptographique (KP);
d) à soumettre le total de contrôle commutatif cryptographique (KP) à une opération cryptographique inverse pour calculer un premier total de contrôle commutatif (KP1) reconstruit,
e) à calculer pour chaque segment de données (Dj, j = a . . z) des données numériques auxquelles est affecté le premier total de contrôle commutatif (KP1), un deuxième total de contrôle de segment (PSj),
f) à calculer par une opération commutative (⊕) des deuxièmes totaux de contrôle de segment (PSj) un deuxième total de contrôle commutatif (KP2), et
g) à vérifier la correspondance du deuxième total de contrôle commutatif (KP2) avec le premier total de contrôle commutatif (KP1) reconstruit.

13. Dispositif selon l'une des revendications 10 à 12, dans lequel l'unité de calcul est configurée de manière à calculer les totaux de contrôle de segment (PSi, PSj) selon l'un au moins des modes suivants:
- calcul de la valeur de hachage ("hash value")
- calcul de codes CRC
- utilisation d'au moins une fonction unidirectionnelle cryptographique.

14. Dispositif selon l'une des revendications 10 à 13, dans lequel l'unité de calcul est configurée de telle manière que l'opération cryptographique est un procédé cryptographique symétrique.

15. Dispositif selon l'une des revendications 10 à 13, dans lequel l'unité de calcul est configurée de telle manière que l'opération cryptographique est un procédé cryptographique asymétrique.

16. Dispositif selon l'une des revendications 10 à 15, dans lequel l'unité de calcul est configurée de telle manière que l'opération commutative (⊕) possède la propriété de l'associativité.

17. Dispositif selon l'une des revendications 10 à 16, dans lequel l'unité de calcul est configurée de manière à protéger les données numériques dont les segments de données (Di) ne sont pas liés à un ordre.

18. Dispositif selon l'une des revendications 10 à 16, dans lequel l'unité de calcul est configurée de manière à protéger les données numériques qui sont traitées selon un protocole de gestion de réseau.
